# EUROPEAN PATENT SPECIFICATION

(11) **EP 2 689 500 B1**
(45) Date of publication and mention of the grant of the patent: **07.03.2018**
(21) Application number: 12761054.1
(22) Date of filing: 26.03.2012
(51) Int. Cl.: H01R 24/58, G06F 1/16, H04Q 1/02

(54) **PATCH PANEL ASSEMBLY ADAPTER FOR USE WITH DATA NETWORKS**
SCHALTTAFELANORDNUNGSADAPTER ZUR VERWENDUNG MIT DATENNETZEN
ENSEMBLE ADAPTATEUR POUR PANNEAU DE RACCORDEMENT UTILISABLE AVEC DES RÉSEAUX DE DONNÉES

(30) Priority: 24.03.2011 US 201161467072 P
(43) Date of publication of application: 29.01.2014
(73) Proprietor: Molex, LLC, Lisle, IL 60532 (US)
(72) Inventor: PANELLA, Augusto P., Lisle, Illinois 60532 (US); CURTIS, Dennis W., Lisle, Illinois 60532 (US); ADAMS, Scott, Lisle, Illinois 60532 (US); BAINES, Elliot A., Lisle, Illinois 60532 (US)
(74) Representative: Blumbach · Zinngrebe Patent- und Rechtsanwälte
(86) International application number: PCT/US2012/030534
(87) International publication number: WO 2012/129557

(56) References cited:
- WO-A1-02/39756
- US-A1- 2006 063 406
- US-A1- 2006 063 406
- US-A1- 2009 166 404
- US-A1- 2010 224 578
- US-B1- 6 574 586

## Description

### BACKGROUND OF THE PRESENT DISCLOSURE

The Present Disclosure relates generally to infrastructure management systems and, more particularly, to adapter assemblies which are useful in converting one style of infrastructure asset to another style of infrastructure asset.

Computing networks that exist within large organizations consist of two types of devices that must be inter-connected to form a usable data network - these assets are generally classified as either end-user devices and networking devices. Examples of end-user devices include personal computers, voice-over-internet protocol (VoIP) phones and network printers. A typical Local Area Network (LAN) for a large-scale enterprise may include thousands of end-user devices deployed throughout a campus in individual offices or in common areas accessible to the end-users. In addition, data networks also typically include network devices such as switches and routers that form the core of the network. These networking devices serve to route data between devices on the LAN, between the LAN and the larger corporate Wide Area Network, or to the Internet. These network devices are typically located in a centralized room or rooms, known as wiring closets and data centers.

Information technology (IT) departments for such organizations need to know the status of network connectivity of each device, the physical location of the devices, and need to identify the source and location of any errors or problems as quickly as possible. Tracking of device assets is a key concern - for example, in monitoring the presence of devices on the network for loss-prevention purposes or to ensure devices are properly physically positioned in offices or on floors where end users can best utilize them while maintaining proper connectivity of the network. A unified system for tracking devices connected to the network and monitoring the status of the physical connectivity of the network is described in International Patent Application No. PCT/US2009/059807, filed 07 October 2009, and assigned to the assignee of the Present Disclosure. Additional related material may be found in International Patent Application Nos. PCT/US2009/059805, also filed 07 October 2009; PCT/US2009/059798, also filed 07 October 2009; and PCT/US2010/051381, filed 05 October 2010. Each of these aforementioned Applications is assigned to the assignee of the Present Disclosure.

A smart infrastructure management system is described in the aforementioned '807 Application. These type of smart systems permit an IT department to determine if various system assets, such as personal computers, printers, facsimile machines and the like are properly connected to the organization's data network. Advantageously, such smart systems permit their users to not only determine if network assets are connected to the network and where they are connected, but also in locating where problems exist in the physical network wiring. Such systems rely upon "smart" patch panels; that is, patch panels with improved functionality that necessarily present a display indicating status, location and connectivity of network assets. In order to convert an older data network into a "smart" one with improved functionality for determining and controlling network assets, the organization must, for the most part, remove all of its connectivity at least in terms of patch panels. This aspect is very time consuming and labor intensive.

The patch panels are typically located at one location, such as in a switch closet, and space comes at a premium because switches and other components are also located in the switch closet, as components that are separate from the patch panels. These patch panels typically utilize jacks for their connectors. Replacement and retrofitting of infrastructure management components such as patch panels require tedious labor in removing the old, "standard" patch panels and replacing them with a "smart" patch panel that includes management processors that indicate status and function of network assets. The older panels have a plurality of female jacks, to which network cables must be disconnected and then rewired to replacement patch panels of a smart system. A system and a method for automatically obtaining the connectivity status, or map, of a cabling system in data and/or voice networks are disclosed in document U. S. Patent Application No. 2006/0063406 A1. A patch panel as disclosed by this document have no structure that includes primary and secondary circuit boards spaced apart from each other.

The Present Disclosure is directed to an adapter for use with such an infrastructure management system, which provides an almost immediate replacement for the older panels at a significant time and labor savings. The smart panels that are used as replacement panels have processors that permit scanning of the network and provide identifying data that permits a network manager to make internal decisions as to the status of a network. The smart panels are incorporated into a standard system as adapters, namely, smart patch panel assembly structures that may be inserted into the data communication network in order to replace older patch panels and connect them in a manner to other network devices so that the monitoring of the status of the network devices may be performed without requiring replacement of the older panels.

In one sense, the patch panel assembly adapter is provided to replace the older patch panels of a network without necessitating their removal. In this regard, the smart, adapter patch panels may be considered as interface assemblies that provide the system with the ability to monitor the status and operational conditions of end-user devices connected to the work area outlets of the network, as well as other network devices in a fashion and footprint that utilizes the existing space devoted to the network, such as a switch closet.

The Present Disclosure is therefore directed to a patch panel assembly in the form of an adapter assembly that can be utilized with patch panels of an existing network and which facilitates the insertion of new, smart patch panels in a wiring closet without undoing the wiring of the older patch panels and the network.

### SUMMARY OF THE PRESENT DISCLOSURE

Accordingly, it is a general object of this Present Disclosure to provide an adapter patch panel assembly for use in the updating or modernizing of an existing infrastructure management system without requiring the removal of older system patch panels and associated rewiring thereof.

Patch panel adapter assemblies of the Present Disclosure accomplish this and other objects by way of their structure. In a preferred embodiment, a patch panel adapter assembly is provided to be used in upgrading an existing data network. The patch panel adapter assembly has a structure that permits it to be either directly mounted to an existing , older patch panel in a manner such that a one to one correspondence is maintained between the receptacle jacks of the older panel and the plug connectors of the new, smart panel. The new adapter assemblies may be individually attached to a corresponding older panel or the new assemblies may be supported as an array and spaced apart from their corresponding older panel counterparts. In any event a spacing of between 3 and 10 cm is maintained between the adapter assemblies and the older panels.

The new patch panels have a structure that includes primary and secondary circuit boards spaced apart from each other. The secondary circuit board is smaller than the primary circuit board so that a plurality of connectors may be mounted to the primary circuit board in a fashion such that they project forwardly therefrom. Preferably, the connectors are arranged in side-by-side order and their projection from the primary circuit board creates an open space adjacent to and underneath them in which the secondary circuit board is received. The connectors receive patch cords having a stub length that is preferably equal to the spacing between the old and new patch panels. The stub lengths are flexible so that they may be manipulated and easily attached to the older panels. In some instances to overcome tolerance or other dimensional problems, the stub lengths may be greater than the spacing between the two panels. In this instance, it is desirable to form the stub lengths into loops so that some play is present in the cables.

The first connectors preferably take the form of jacks, such as RJ-11 or RJ-45 jacks that define discrete connection ports of the adapter patch panel assembly. The termination portions of the jacks extend along the rear faces of the new patch panels and wires of the cable stub lengths are terminated thereto. The termination may utilize insulation displacement technology, soldered connections or other forms of connection.

The new patch panel preferably contain a first set of ICs such as logic devices and multiplexers which are operatively connected to the connectors of the new patch panel so that the first ICs can determine the status of cables and work area outlets on the network, as well as act to combine several input signals into a single output signal. The cable stub lengths have their ends terminated to plugs that are configured to mate with corresponding jacks of the older patch panels. In this regard, once the adapter assembly is set up in a spaced apart fashion from the older patch panel, it is a simple task to connect the newer patch panels to the older panels, by merely plugging in the connectors into the older patch panel receptacle jacks in a one to one corresponding order. In this manner, the connection ports of the new patch panel assembly are instantly be connected to the network devices or a server, router, switch or the like.

The functionality of the new patch panel, as explained in the '807 Application, includes an isolation of the first and second circuit boards and ICs facilitates repair, replacement and/or servicing of the patch panel assembly in the field. If one such patch panel assembly has one or more defective second integrated circuits or a portion of the second circuitry thereupon is defective, the second circuit board can be removed and replaced and if the circuit boards needing repair are utilized in the new patch panels, the new patch panel can be removed by a simple unplugging task rather than removing all of its attendant wiring.

These and other objects, advantages and features of the Present Disclosure shall become more evident in a reading of the following description.

### BRIEF DESCRIPTION OF THE FIGURES

The organization and manner of the structure and operation of the Present Disclosure, together with further objects and advantages thereof, may best be understood by reference to the following Description, taken in connection with the accompanying Figures, wherein like reference numerals identify like elements, and in which:
Figure 1 is a perspective view of a "smart" patch panel assembly adapter shown separated from a mounting rack or other similar device;

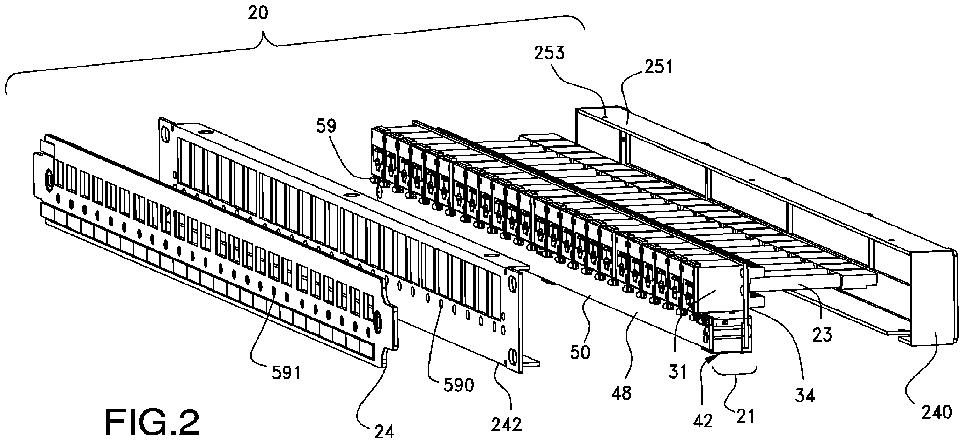

Figure 2 is an exploded view of the patch panel assembly of Fig. 1;
Figure 3 is a sectional view of the patch panel assembly of Fig. 2, taken along Line B-B;
Figure 4 is a partially exploded view of the patch panel assembly of Fig.1, in opposition to and spaced apart from an older patch panel array of an established network;

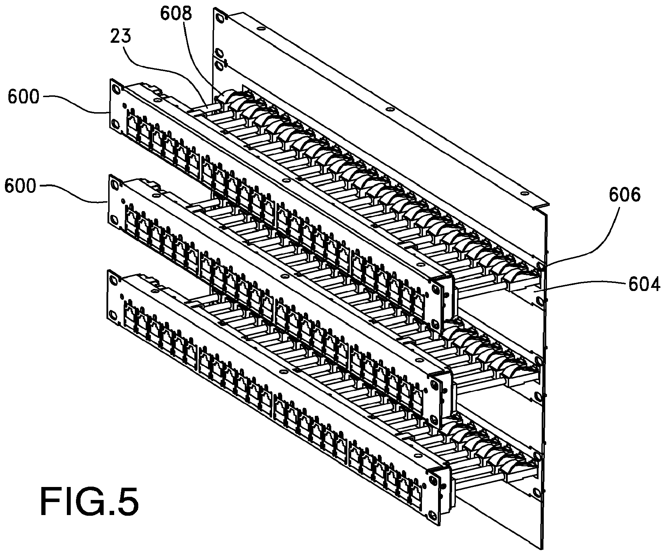

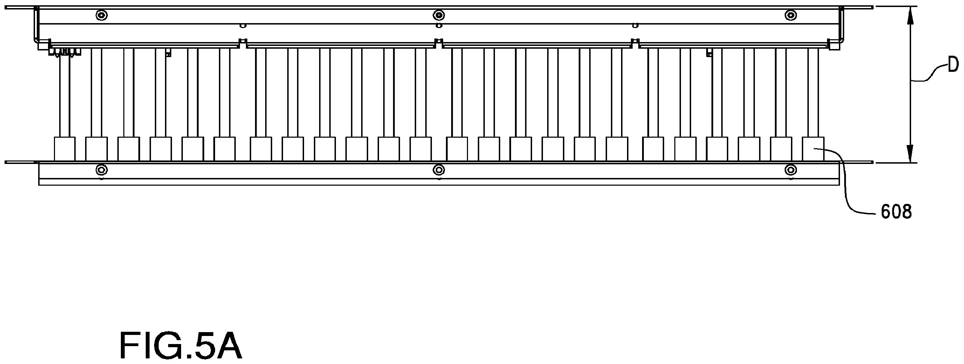

Figure 5 is the same view as Fig. 4, but with the cable stub lengths connected to the jacks of the older patch panel of the existing network;
Figure 5A is top plan view of Fig. 5;

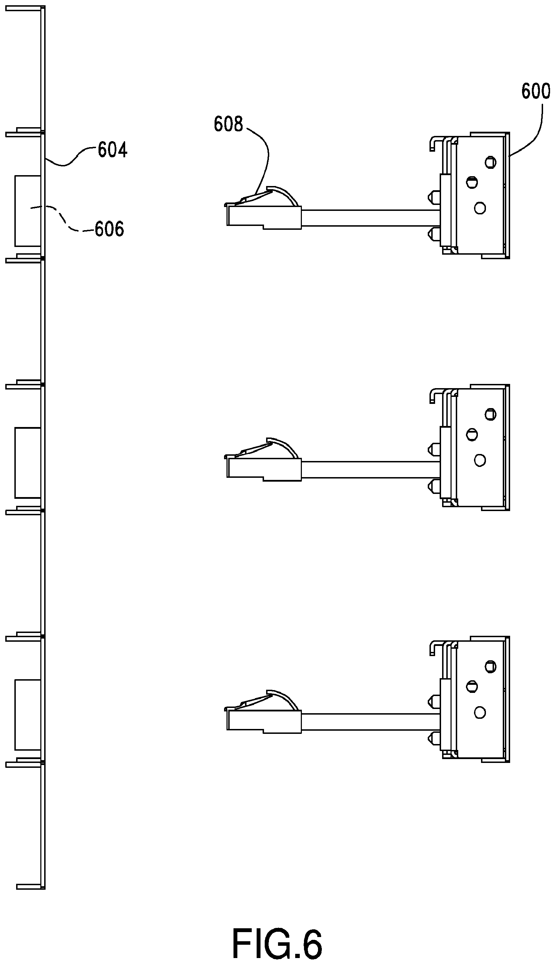

Figure 6 is a side elevational view of Fig. 4;

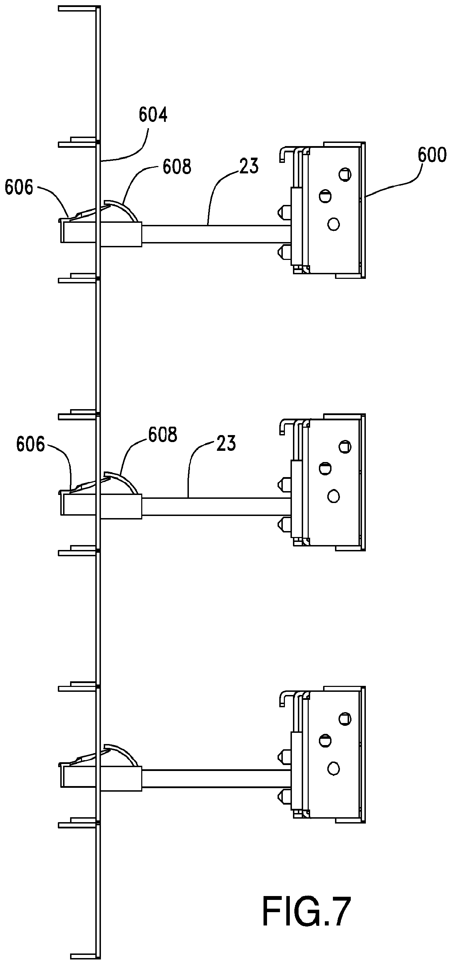

Figure 7 is a side elevational view of Fig. 5; and
Figure 8 is a perspective view of a patch panel adapter assembly, taken from the rear thereof to illustrate a manner of looping the cable stub lengths.

### DESCRIPTION OF THE PREFERRED EMBODIMENTS

The following description is intended to convey the operation of exemplary embodiments of the Present Disclosure to those skilled in the art. It will be appreciated that this description is intended to aid the reader, not to limit the Present Disclosure. As such, references to a feature or aspect of the Present Disclosure are intended to describe a feature or aspect of an embodiment of the Present Disclosure, not to imply that every embodiment of the Present Disclosure must have the described characteristic. The Present Disclosure is directed to an improved manner of retrofitting or replacing existing data networks, specifically older passive networks that do not possess any ability to scan the ports of the network and make determinations what devices are connected to the ports of the network and the like. A smart data network and patch panels used therewith are disclosed in the '807 Application. In the '807 Application, the description of the functionality given to the infrastructure management system by the associated "smart" patch panels is described in great detail. However, that Application contemplates replacement of an existing network with the components described therein which may make the new patch panels "smart." Sometimes the replacement is costly, both in terms of labor required to replace the panels and their attendant wiring and with the downtime of the system.

The patch panels of an existing network may be mounted singularly, or as a group in a rack within a dedicated wiring room, such as a wiring closet. These patch panels typically include a plurality of individual ports into which cables may be inserted to connect the ports on various panels together or to connect the ports to devices located upstream of the patch panels, such as switches. The rear of each connection port has a multi-wire network cable terminated to it, which leads to a data communication, or work area outlet located remote from the patch panel to which a network device may be connected. The work area outlets are found in work stations, in offices or the like, in a location where a network user has a computer, printer, etc. available to him for use. The switches, patch panels, work area outlets and end-user devices cooperate to form the portion of the network which the infrastructure management system monitors.

Certain of the end-user devices must be connected to other end-user and network devices on the network, such as a telephone, facsimile machine and/or modem, all of which must be connected to a public telephone exchange. Similarly, a VoIP phone must be connected to the Internet and so on. Furthermore, the personal and laptop computers and printers must be connected to the server and storage devices of the network so as to ensure complete communication with each other and in order to access materials held in storage. A switch allows these devices to communicate with each other. When physical connections between the network devices and network switches are moved, added or changed, the patch panels in a network are the points where the moves, additions or changes are completed by technicians changing, adding or moving cables between various ports of the patch panels. As such, the patch panels may include a plurality of visual indicators, preferably in the form of lights or LEDs 591 that are associated with single ports of the patch panels. These lights are lit in response to various conditions of the network and the illumination of these lights may be used to assist a technician in the task of moving, changing and removing patch cords.

The interface between the network devices and the network switches occurs at a patch panel and as noted above, the patch panels are locations at which technicians make desired, or requested, changes to a network by adding, removing, moving or changing cables. As noted above, the work area outlets and any individual end-user devices connected thereto form one set of connection points on the network. In this regard, one set of patch panels is the last component in the network before the end-user devices and these patch panels are the primary location where the changing of patch cords/cables takes place. These patch panels may be thus considered as the final interfaces, or junctions, between the server and a scanner of a smart network and the individual end-user devices connected to the work area outlets.

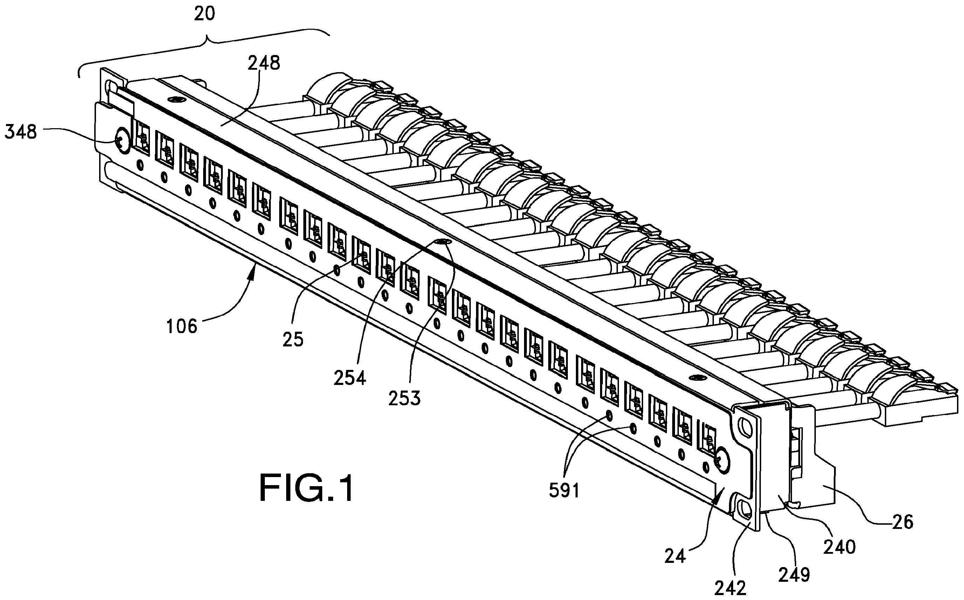

Typically, the patch panels are arranged in an array within a dedicated room within a business, which is commonly known as a switch, or wiring, closet. The closet may contain one or more racks, typically vertical and each rack is slotted to host a plurality of individual patch panels. A smart patch panel 106 utilizing a patch panel adapter assembly 20 constructed in accordance with the principles of the Present Disclosure is illustrated in Fig. 1. The patch panel adapter assembly 20 is a "smart" one that includes a face panel 24 that may have a plurality of individual connection ports 25 disposed therein that are adapted to receive various cables in the form of network patch cords and the like (not shown). The face panel may also include a lighted display or other visual indicator, such as a light, light pipe, light-emitting diode (LED) or the like associated therewith for displaying the connectivity of the end-user devices connected to the work area outlets. The face panel 24 lies adjacent to and in front of a front cover member 242, and it is attached to the front cover member 242 by way of screws 348. The assembly may include attachment arms 26 disposed on opposite ends of the assembly. The patch panel adapter assembly 20 may include subcomponents such as a front cover member with openings that receive the receptacle jacks therein, a circuit board-jack assembly and a rear cover 240.

The connection ports 25 of the face panel 24 are aligned with and are disposed adjacent to a set of first connectors 31 that are shown as jacks 32, preferably RJ-11 or RJ-45 style jacks, but it will be understood that other connectors, including optical fiber connectors may be used in the assembly 21. The jacks 32 provide a means by which to connect work area outlets to particular connection ports via a particular network cable and do so with interior receptacles that receive the aforementioned patch cords or cables. The connectors 31 are mounted in a linear array preferably in side-by-side order, on a primary panel 34, shown in the form of an elongated first printed circuit board 36 that extends the full width of the face panel 24 and the patch panel assembly 21. As shown, the connectors 31 are preferably spaced apart from each other a preselected distance to match the spacing of the face panel connection ports 25, but in some instances they may abut each other as a unitary block of connectors. The patch panel assemblies described herein utilize two elongated members that are generically referred to as panels due to their depicted configuration, and in the preferred embodiment as circuit boards. Other structures equivalent in form and function may be utilized in their place.

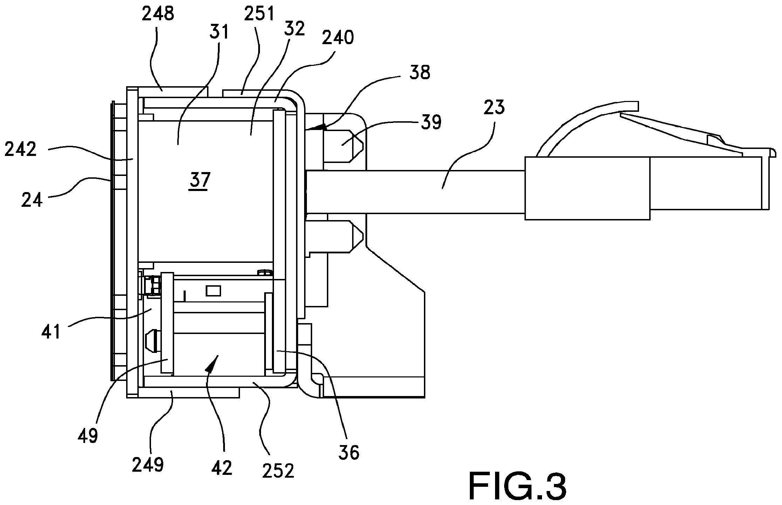

In the illustrated embodiment, and with particular reference to Fig. 3, the connectors utilized for the assembly may include jack housings 37 which are mounted on a front surface 44 of the first circuit board 36 for receiving the male ends of patch cords, and termination ends 38 are mounted on the opposite, rear surface 45 of the primary circuit board 36. Each jack 32 has an opening 320 disposed in the front of its housing 37 that leads to an interior receptacle 321 that houses conductive terminals to which are terminated the wires of the cables 23. The jack openings are preferably aligned with the connection ports 25 of the face panel 24. As noted above, the jack housings 37 are preferably aligned with each other and arrayed on the primary, or first, circuit board 36 in side-by-side order so that their bottom walls define a common surface 420 that preferably extends widthwise along the first circuit board 36.

The termination ends 38 may be separate from the jacks 32 that provide connections to the individual wires of the network stub length cables 23, or they may be formed as part of the jacks 32, in which the first circuit board 36 may have openings formed therein which hold the jacks 32 in place. As illustrated in Fig. 3, the termination ends 38 may include a plurality of projecting studs 39, which hold conductive insulation displacement technology (IDT) terminals. Individual wires of the cable stub lengths 23 are terminated to these IDT terminals.

Preferably, the jack housings 37 are arranged in a linear array along one surface and edge of the first circuit board 36. In this regard, they project forwardly of the first circuit board 36 for a predetermined distance. The jack housings 37 preferably have their bottom surfaces or edges aligned with each other in order to define an open space 41 underneath and adjacent to the jack housings 37. This open space 41 extends adjacent the jack housings 37 and runs underneath the jack housings 37. Also, the jack housing 37 all have their receptacle openings 320 facing one direction, forwardly, as shown in the drawings, while the second connectors, or the termination ends 38 have their termination faces facing the opposite direction. As explained in further detail below, this open space 41 is formed into a protective, hollow nest 42 by the interaction among the first and second circuit boards 36, 49 and the jack housings 37.

A secondary panel 48 is also provided and it takes the form of an elongated second printed circuit board 49 that extends widthwise of the patch panel assembly in opposition to the primary panel 34, and which is preferably smaller in size than the first circuit board 36 in order to permit the mounting of the connectors 31 on the first circuit board 36. The two circuit boards 36, 49 are spaced apart from each other to provide sufficient room within the hollow nest 42 to accommodate both the ICs 45 of the first circuit board 36 and the other ICs 52 arranged on the second circuit board 49. This spacing is accomplished by spacers, or standoffs, which are interposed between the two circuit boards 36, 49 and which are threaded to receive screws therein to space the first and second circuit boards 36, 49 apart, preferably in a parallel fashion, so that the space available within the hollow nest 42 for components is the same for the full width of the patch panel assembly.

The hollow nest 42 of the patch panel adapter assembly accommodates a series of electronic elements, such as a plurality of first ICs that are mounted to the front surface of the first circuit board 36 proximate to and underneath the jacks 32. These ICs may be controllers, multiplexers, logic devices and the like which are operatively connected to the connectors 31 via appropriate circuitry, so that they may read the operational status of the work area outlets and the devices connected to the network at the outlets. The termination ends 38 of the jacks are positioned on the rear surface 45 of the first circuit board 36 and the cable stub lengths 23 extend away from them. A rear cover member 240, shown in the drawings as comprising two overlying pieces, is provided as part of the assembly and it has an opening 241 through which the cable stub lengths 23 and the termination block studs 39 extend. The front cover member 242 has upper and lower flanges 248, 249 that extend rearwardly and fit over similar flanges 251, 252 of the rear cover member 240.

The first circuit board 36 contains circuit paths, such as conductive traces on the circuit board, and preferably all of the circuit paths between typically the jacks, their termination ends and the first ICs are entirely contained on the primary circuit board 36. In this manner, the first ICs are dedicated to network data transfer and status information about the work area outlets and the server, meaning that they receive information from the end-user devices connected to the work area outlets of the network or the status of the work area outlets themselves, so as to monitor the status of the work area outlets and the end-user devices. This information is subsequently transmitted to circuitry on the second circuit board 49, the second ICs and the processor. The second ICs are also preferably entirely contained on the second circuit board 49 and dedicated to operate the LEDs or other displays of the connection ports and transmit the information to a system scanner.

Such an arrangement facilitates testing of the circuits in the field and reduces the likelihood of circuit problems due to poor interconnection between the primary and secondary panels. Additionally, it shortens the circuit path from any path that may include a segment on the secondary panel and by avoiding any connector interface, maintains the circuit electrical characteristics, such as impedance at a desired level.

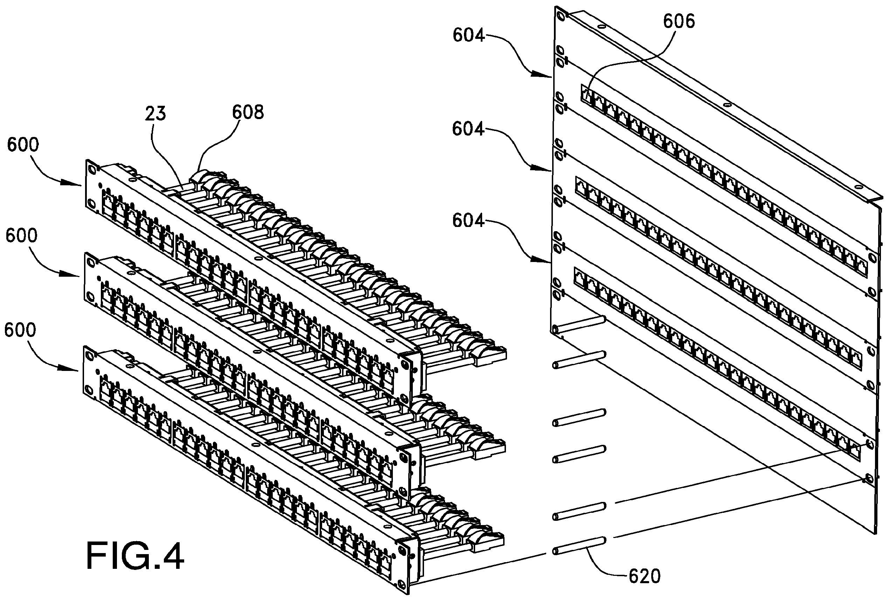

Fig. 4 illustrates an adapter patch panel of the Present Disclosure. Three such panels are shown and each panel 600 includes the structure described hereinabove in terms of processors, ICs, circuit boards and the like and as such contains all the necessary components such that the adapter patch panels are "smart" patch panels, that is, they are ones with increased indicating functionality. The adapter patch panels 600 are shown in opposition to and spaced away from a series of patch panels 604 that form part of an existing data network. The adapter patch panels utilize cable stub lengths 23, of between about 5 to about 10 centimeters and the wires on the cable stub lengths at their near ends are terminated to the connectors, typically receptacle jacks 606. The far ends of the cable stub lengths 23 are terminated to plug connectors 608 that are configured to mate with the jack connectors 606 of the existing data network patch panels. Such plug connectors will be configured to mate with RJ-11 or RJ-45 jacks and as such include locking clips 610 that are depressed to delatch the plug connectors 608 with the receptacle jacks 606.

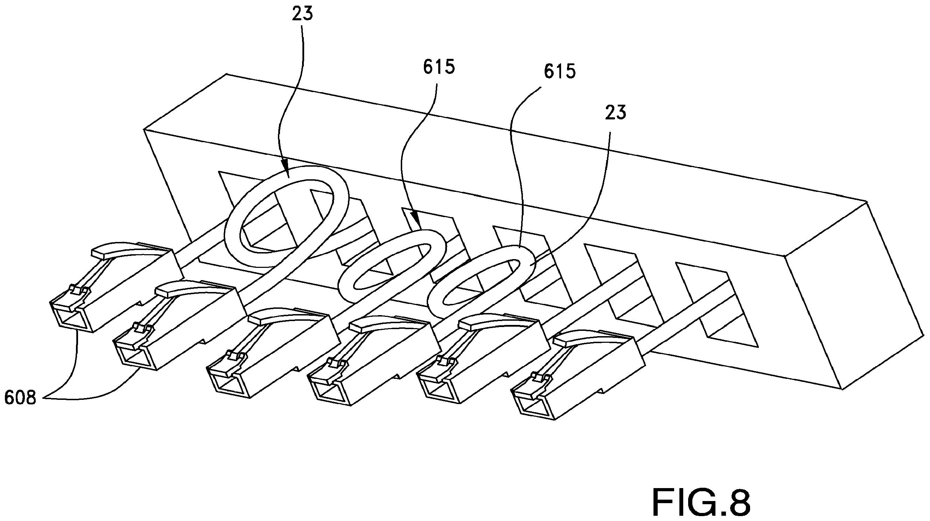

Preferably, the lengths of the cable stub lengths 23 will be less than the separation distance "D" but slightly longer than the distance between the rear of the adapter patch panel and a point within the receptacle jack connectors. This extra length takes into account dimensional deviations that may be present due to tolerance issue. In some applications, the cable stub lengths may be much longer than the separation distance and as such, it will be desirable to "loop" the wires as illustrated in Fig. 8 at 615 so that the adapter patch panel may be manipulated in any of the four directions. Preferably the adapter patch panel has a one to one correspondence with the existing patch panel in terms of its cable stub lengths, meaning that there is one cable stub length and plug connector associated with each receptacle connector on the existing patch panel. Also, the adapter patch panels may be provided with visual indicators of the same color, order and size as in the existing data network patch panels so that the retrofit or replacement of the existing data network will match the system characteristics of the existing data network.

In this manner it is an easy task to merely plug in the new "smart" patch panel and obtain increased functionality of the system in a system retrofit manner, rather than disconnecting the old patch panels of the existing system and rewiring the cables to the new patch panel, including the tedious task of terminating the cable stub lengths. At present, it is contemplated that the cable stub lengths may be either terminated to the smart patch panel connectors by way of insulation displacement or by direct soldering to the circuit boards that support the receptacle connectors of the adapter patch panel. Other means of termination are also contemplated herein. The adapter patch panels may be supported by a rack, not shown or they may be individually attached to the existing data network patch panels by way of standoffs 620 (Fig. 4) that serve to space the adapter patch panels a preselected distance away from the existing patch panels. This is a useful and space saving solution that minimizes the need during a system retrofit to expand the switch closet.

It will be understood that there are numerous modifications of the illustrated embodiments described above which will be readily apparent to one skilled in the art, such as many variations and modifications of the compression connector assembly and/or its components including combinations of features disclosed herein that are individually disclosed or claimed herein, explicitly including additional combinations of such features, or alternatively other types of contact array connectors. Also, there are many possible variations in the materials and configurations. These modifications and/or combinations fall within the art to which the Present Disclosure relates and are intended to be within the scope of the claims, which follow. It is noted, as is conventional, the use of a singular element in a claim is intended to cover one or more of such an element.

## Claims

1. A patch panel adapter assembly (20) for use in retrofitting an existing data network to a network with improved functionality, the existing network having at least one existing patch panel with a plurality of receptacle connectors supported thereby in a preselected array, the patch panel adapter assembly **characterized in**:
an adapter patch panel including a circuit board assembly including first and second circuit boards (36, 49) spaced away from each other, wherein secondary circuit board (49) is smaller than the primary circuit board (36) in order to permit the mounting of the connectors on the first circuit board (36), a plurality of connectors connected to the circuit board assembly, a plurality of indicators for selectively indicating a status condition of at least one of the connectors;
a plurality of integrated circuits selectively connected to the connectors and the indicators for selectively operating the indicators associated with selective connectors; and
a plurality of stub lengths of multiple wire cables extending away from the adapter patch panel (600), each of the stub lengths being terminated to a single connector of the adapter patch panel (600) at one end thereof and further being terminated to a plug connector (608) at the other end thereof, the cable stub lengths (23) being arrayed along the adapter assembly such that each plug connector (608) may be aligned with a patch panel of an existing network.

2. The patch panel adapter assembly (20) of Claim 1, wherein lengths of the cable stub lengths (23) are between about 5 to 10 centimeters and the adapter patch panel is spaced apart from the existing patch panel a corresponding distance equal to or less than 5 to 10 centimeters.

3. The patch panel adapter assembly (20) of Claim 1, further including a standoff member that interconnects the adapter patch panel (600) with the existing patch panel in a spaced apart fashion.

4. The patch panel adapter assembly (20) of Claim 3, wherein the existing patch panel receptacle connectors include jacks, each of the jacks having a receptacle opening disposed therein for receiving a plug connector of the adapter patch panel (600) therein.

5. The patch panel adapter assembly (20) of Claim 1, wherein the wires of the cable stub lengths (23) are terminated to the adapter patch panel connectors by way of insulation displacement terminals.

6. The patch panel adapter assembly (20) of Claim 1, wherein the wires of the cable stub lengths (23) are terminated to the adapter patch panel connectors by soldering.

7. The patch panel adapter assembly (20) of Claim 1, wherein the cable stub lengths (23) are long enough to permit then to be looped between the one and other ends thereof.

8. The patch panel adapter assembly (20) of Claim 1, wherein the cable stub lengths (23) are long enough to permit then to be looped between the one and other ends thereof.

9. The patch panel adapter assembly (20) of Claim 1, wherein the indicators are matching in colors and sizes to indicators used on the existing patch panel.

## Patentansprüche

1. Schalttafel-Adapteranordnung (20) zur Verwendung beim Nachrüsten eines bestehenden Datennetzwerks zu einem Netzwerk mit verbesserter Funktionalität, wobei das bestehende Netzwerk mindestens eine bestehende Schalttafel mit einer Mehrzahl von Verbinderbuchsen aufweist, die durch diese in einer vorgewählten Anordnung gehalten werden, wobei die Schalttafel-Adapteranordnung **gekennzeichnet ist durch**:
eine Adapterschalttafel mit einer Leiterplattenanordnung, die eine erste und eine zweite Leiterplatte (36, 49) umfasst, die voneinander beabstandet sind, wobei die sekundäre Leiterplatte (49) kleiner ist als die primäre Leiterplatte (36), um die Montage der Verbinder an der ersten Leiterplatte (36) zu ermöglichen, eine Mehrzahl von Verbindern, die an die Leiterplattenanordnung angeschlossen sind, eine Mehrzahl von Anzeigeelementen zum gezielten Anzeigen eines Statuszustandes mindestens eines der Verbinder,
eine Mehrzahl von integrierten Schaltungen, die selektiv mit den Verbindern und den Anzeigeelementen verbunden sind, um gezielt Anzeigeelemente zu betreiben die selektiven Verbindern zugeordnet sind, und
eine Mehrzahl von Stichleitungsstücken aus mehradrigen Kabeln, die sich von der Adapterschalttafel (600) hinweg erstrecken, wobei jedes der Stichleitungsstücken an einem seiner Enden **durch** einen einzigen Verbinder der Adapterschalttafel (600) abgeschlossen ist und an seinem anderen Ende **durch** einen Verbinderstecker (608) abgeschlossen ist, wobei die Kabel-Stichleitungsstücken (23) derart entlang der Adapteranordnung angeordnet sind, dass die Verbinderstecker (608) jeweils mit einer Schalttafel eines bestehenden Netzwerks ausgerichtet werden können.

2. Schalttafel-Adapteranordnung (20) nach Anspruch 1, wobei die Kabel-Stichleitungsstücken (23) eine Länge zwischen etwa 5 und 10 Zentimetern aufweisen und die Adapterschalttafel in einer entsprechenden Entfernung von weniger als 5 bis zu 10 Zentimetern von der bestehenden Schalttafel angeordnet ist.

3. Schalttafel-Adapteranordnung (20) nach Anspruch 1, welche ferner ein Abstandshalterelement aufweist, das die Adapterschalttafel (600) mit der bestehenden Schalttafel in beabstandeter Art und Weise verbindet.

4. Schalttafel-Adapteranordnung (20) nach Anspruch 3, wobei die Verbinderbuchsen der bestehenden Schalttafel Buchsen umfassen, wobei jede der Buchsen eine Buchsenöffnung aufweist, um darin einen Verbinderstecker der Adapterschalttafel (600) aufzunehmen.

5. Schalttafel-Adapteranordnung (20) nach Anspruch 1, wobei die Adern der Kabel-Stichleitungsstücken (23) über Schneidklemmanschlüsse an die Verbinder der Adapterschalttafel angeschlossen sind.

6. Schalttafel-Adapteranordnung (20) nach Anspruch 1, wobei die Adern der Kabel-Stichleitungsstücken (23) durch Löten an die Verbinder der Adapterschalttafel angeschlossen sind.

7. Schalttafel-Adapteranordnung (20) nach Anspruch 1, wobei die Kabel-Stichleitungsstücken (23) lang genug sind, um zwischen dem einen und dem anderen Ende in einer Schleife geführt zu werden.

8. Schalttafel-Adapteranordnung (20) nach Anspruch 1, wobei die Kabel-Stichleitungsstücken (23) lang genug sind, um zwischen dem einen und dem anderen Ende in einer Schleife geführt zu werden.

9. Schalttafel-Adapteranordnung (20) nach Anspruch 1, wobei die Anzeigeelemente in Farbe und Größe auf die an der bestehenden Schalttafel verwendeten Anzeigeelemente abgestimmt sind.

## Revendications

1. Ensemble adaptateur pour panneau de répartition (20) destiné à être utilisé pour modifier un réseau de données existant en un réseau avec une fonctionnalité améliorée, le réseau existant ayant au moins un panneau de répartition existant avec une pluralité d'embases de connecteur supportées par ce dernier dans un ensemble présélectionné, l'ensemble adaptateur pour panneau de répartition étant **caractérisé en ce qu'**il comprend :
un panneau de répartition d'adaptateur comprenant un ensemble de cartes de circuit imprimé comprenant des première et seconde cartes de circuit imprimé (36, 49) espacées l'une de l'autre, dans lequel la carte de circuit imprimé secondaire (49) est plus petite que la carte de circuit imprimé principale (36) afin de permettre le montage des connecteurs sur la première carte de circuit imprimé (36), une pluralité de connecteurs raccordés à l'ensemble de cartes de circuit imprimé, une pluralité d'indicateurs pour indiquer sélectivement une condition d'état d'au moins l'un des connecteurs ;
une pluralité de circuits intégrés sélectivement raccordés aux connecteurs et aux indicateurs pour actionner sélectivement les indicateurs associés aux connecteurs sélectifs ; et
une pluralité de longueurs de plot de contact de plusieurs câbles de fils s'étendant à distance du panneau de répartition d'adaptateur (600), chacune des longueurs de plot de contact se terminant par un seul connecteur du panneau de répartition d'adaptateur (600) au niveau de l'une de ses extrémités et se terminant en outre par un connecteur mâle (608) au niveau de son autre extrémité, les longueurs de plot de contact de câbles (23) étant disposées le long de l'ensemble adaptateur de sorte que chaque connecteur mâle (608) peut être aligné avec un panneau de répartition d'un réseau existant.

2. Ensemble adaptateur pour panneau de répartition (20) selon la revendication 1, dans lequel les longueurs des longueurs de plot de contact de câbles (23) sont comprises entre environ 5 et 10 centimètres et le panneau de répartition d'adaptateur est espacé du panneau de répartition existant selon une distance correspondante égale ou inférieure à 5 jusqu'à 10 centimètres.

3. Ensemble adaptateur pour panneau de répartition (20) selon la revendication 1, comprenant en outre un élément de douille-entretoise autosertissable qui interconnecte le panneau de répartition d'adaptateur (600) avec le panneau de répartition existant d'une manière espacée.

4. Ensemble adaptateur pour panneau de répartition (20) selon la revendication 3, dans lequel les embases de connecteur de panneau de répartition existant comprennent des connecteurs femelles, chacun des connecteurs femelles ayant une ouverture d'embase disposée à l'intérieur pour y recevoir un connecteur mâle du panneau de répartition d'adaptateur (600).

5. Ensemble adaptateur pour panneau de répartition (20) selon la revendication 1, dans lequel les fils des longueurs de plot de contact de câbles (23) se terminent par les connecteurs de panneau de répartition d'adaptateur au moyen de bornes de déplacement isolantes.

6. Ensemble adaptateur pour panneau de répartition (20) selon la revendication 1, dans lequel les fils des longueurs de plot de contact de câbles (23) se terminent par les connecteurs de panneau de répartition d'adaptateur par soudage.

7. Ensemble adaptateur pour panneau de répartition (20) selon la revendication 1, dans lequel les longueurs de plot de contact de câbles (23) sont assez longs pour permettre d'être ensuite enroulés entre ses extrémités et les autres.

8. Ensemble adaptateur pour panneau de répartition (20) selon la revendication 1, dans lequel les longueurs de plot de contact de câbles (23) sont assez longues pour permettre d'être ensuite enroulées entre ses extrémités et les autres.

9. Ensemble adaptateur pour panneau de répartition (20) selon la revendication 1, dans lequel les indicateurs correspondent du point de vue des couleurs et des tailles aux indicateurs utilisés sur le panneau de répartition existant.
